# EUROPEAN PATENT SPECIFICATION

(11) **EP 1 696 153 B1**
(45) Date of publication and mention of the grant of the patent: **05.12.2012**
(21) Application number: 04772892.8
(22) Date of filing: 01.09.2004
(51) Int. Cl.: F16H 55/06, C22C 45/00, G04B 13/02

(54) **PRECISION GEAR, ITS GEAR MECHANISM AND PRODUCTION METHOD OF PRECISION GEAR**
PRÄZISIONSZAHNRAD, SEIN GETRIEBEMECHANISMUS UND VERFAHREN ZUR HERSTELLUNG DES PRÄZISIONSZAHNRADS
ENGRENAGE DE PRECISION, SON MECANISME D'ENGRENAGE ET PROCEDE DE PRODUCTION D'ENGRENAGE DE PRECISION

(30) Priority: 02.09.2003 JP 2003310153
(43) Date of publication of application: 30.08.2006
(73) Proprietor: NAMIKI SEIMITSU HOUSEKI KABUSHIKI KAISHA, Tokyo 123-8511 (JP); YKK Corporation, Tokyo 101-0024 (JP); Inoue, Akihisa, Sendaishi, Miyagi 980-0861 (JP); Saotome, Yasunori, Isesaki Gunma 372-0001 (JP)
(72) Inventor: INOUE, Akihisa 11-806, Kawauchi Zyuutaku, Sendai, Miyagi 980-0861 (JP); SAOTOME, Yasunori, Isesaki, Gunma 372-0001 (JP); SHIMIZU, Yukiharu c/o Namiki Seimitsu Houseki, Adachi-ku, Tokyo 123-8511 (JP); KITA, Kazuhiko, Sendai, Miyagi 982-0807 (JP); WATANABE, Daichi c/o Namiki Seimitsu Houseki, Adachi-ku, Tokyo 123-8511 (JP); ISHIDA, Mamoru, Sendai, Miyagi 981-8002 (JP); TAKEDA, Hideki, Sendai, Miyagi 981-0911 (JP)
(74) Representative: Bauer Vorberg Kayser Patentanwälte
(86) International application number: PCT/JP2004/013020
(87) International publication number: WO 2005/024274

(56) References cited:
- EP-A- 0 875 318
- JP-A- 8 074 010
- JP-A- 10 002 385
- JP-A- 11 071 602
- JP-A- 2000 129 378
- JP-A- 2000 160 308
- JP-A- 2000 345 309
- JP-B2- 7 122 120
- INOUE H. ET AL.: 'Bisho kikai buhin o amorphous gokin de tsukuru' MACHINE TOOL & MACHINE-TECHNOLOGY vol. 34, no. 10, 1993, pages 114 - 119, XP002985768

## Description

### TECHNICAL FIELD

The present invention relates to a precision gear which is small-sized, subjected to a heavy load and required to have a long life-span, a gear mechanism employing the precision gear, according to the preamble of claim 1 and as it is disclosed EPO875318A.

### BACKGROUND OF THE INVENTION

In the field of precision gears which are used in precision devices requiring high accuracy, such as watches and micro-geared motors, metal-made precision-gears whose modules exceed 0.2 and which have excellent properties and accuracy are manufactured by various methods including pressing and forming by rolling, as well as electro-discharge forming, cutting, etc.

However, regarding forming of a metal-made gear whose module is 0.2 or less, it is difficult to practically employ the electro-discharge forming, cutting, pressing, and forming by rolling, since there are problems in terms of accuracy of the gear, manufacturing cost and the like. For this reason, resin-made precision-gears whose complex minute structures can be easily formed by mold-forming are generally used widely.

The resin-made precision-gears can be mass-produced at low cost. However, as compared to metal-made products, resin-molded integrated products are considerably inferior to the metal-made products in mechanical strength and hardness, tend to change in size and configuration thereof according to change in environmental temperature, and have creep properties. Therefore, the resin-molding is completely unsatisfactory for forming an ultra-high-precision gear whose module is 0.2 or less and which is highly reliable. In addition, as compared to the surface hardness and tensile strength of metallic material, those of resinous material are considerably low. Moreover, the resinous material is inferior to the metallic material in heat resistance. These properties of the resinous material have great adverse-effects on the durability and lifespan of the resin-molded product.

In recent years, many resinous materials which are excellent in mechanical strength have been commercially available, because of developments of various strengthening additive-materials. However, the present situation in the filed of the resinous materials does not yet reach the level of practical use of the metallic materials including tool steels. Because of this, it is more preferable that a precision gear is formed of metallic material when it is a gear which is to be subjected to a heavy load.

As moldable metallic-materials, there are alloys for a die-casting process, which include aluminum alloys, magnesium alloys, and copper alloys. However, the tensile strength of the alloys is about 750 MPa and is low like that of the resin materials. In addition, the surface roughness of products made from the alloys is about 5 µm Ry and uneven shrinkage of the alloy products occurs due to crystal particles in the alloys and there are sharp convex regions on the surfaces of the alloy products. Therefore, the alloys are unsuitable as materials for precision gears whose modules are 0.2 or less. Thus, developments of precision gears having mechanical properties that are the same as products made of tool steels have, or better than the properties of the tool steel made-products, have been desired.

Incidentally, precision gears of tool steels are generally made by machining, so that it is difficult to mass-produce the precision gears at low cost. In addition, it is considerably hard to get a machining accuracy and, even if the hardness of the finished products is high, the surface roughness of the products has a great effect on wear of the product materials which is brought about by sliding of the products in use, and consequently lifespan of the products is reduced. In order to also improve durability, precision gears having higher tensile strength and good surface smoothness are desired.

A manufacturing process for producing a metal-made gear whose module is 0.1 and which has excellent surface smoothness (Proc. 7th IEEE Workshop on Micro Mechanical Systems, (1994) P343-348) and a metal-made gear whose module is 0.01 (Proc. IEEE 13th Int. Conf. on Micro Mechanical Systems, MEM 2000, (2000) P288-293) have been reported. However, in these cases, the LIGA process is used, and the gears are formed by forging or plastic working.

In addition, a production method and a device, in which mass-production of metal-made gear-shaped elements is taken into consideration, have been proposed (Japanese Patent Application Laid-Open No. Hei. 10-296424). However, the details of the specification and evaluation of the gear-shaped elements are not described.

Alloy compositions which form amorphous metal structures, or metal structures having nanocrystals of 100 nm or less in amorphous metal structures, have already been proposed (Japanese Patent Application Laid-Open Nos. 2000-345309, 2001-316784, 2002-256401, 2000-54089, 2001-40460, and 2000-129378, Japanese Patent Publication No. Hei. 7-122120, and Japanese Patent Application Laid-Open Nos. Hei. 8-74010 and 2000-160308). However, a gear whose module is 0.2 or less and which has surface smoothness of 2 µm Ry or less and is to be made by a manufacturing method in which mass-production is taken into consideration, has not been proposed yet.

Moreover, the fact that it is possible to produce a gear-shaped component using a method for producing a sintered bulk-shaped body of high strength is described and shown in Japanese Patent Application Laid-Open No. Hei. 11-71602. However, in this case, it is difficult to get a dimensional accuracy of the gear-shaped component, since the volume of metal powders used for sintering is shrunk by a quantity equivalent to spaces between adjacent particles of the metal powders at the time of the sintering. In addition, there are vacancies in the component that has been made by the sintering, and the vacancies are easy to produce cracks. Even in the case where metal powder density is increased, the fact that the strength of the component is lowered as compared to the inherent strength of the metal, can not denied. It is preferable that material having an even structure in which vacancies are not present is used as material for a precision gear which is to be subjected to a heavy load and in which a high reliability is required.

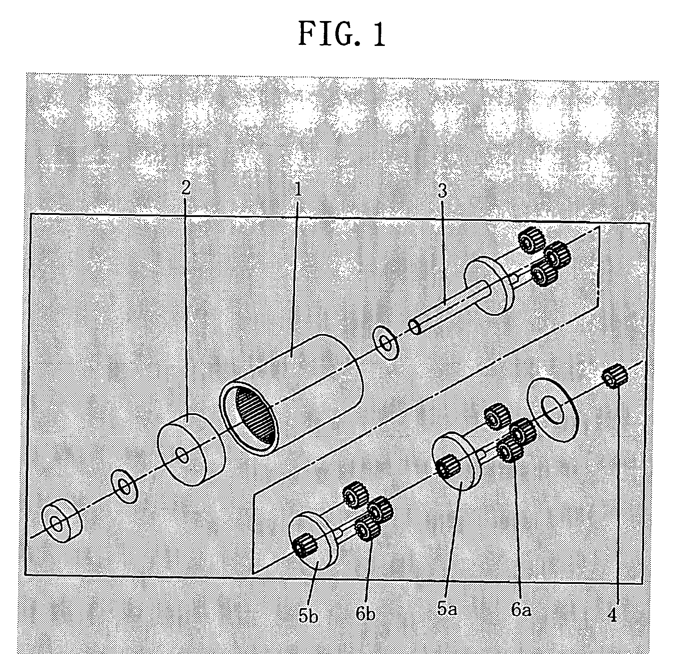

Referring now to Fig. 1, there is illustrated a precision planetary gear reduction system which employs a sun carrier which is one of ultra-precision gears having complex configurations. In the precision planetary gear reduction system, a sun gear is provided at one side of the sun carrier and three pins on which planetary gears are to be fitted are provided at the other side of the sun carrier. A conventional sun carrier assembly comprises five elements, namely, a carrier made by pressing a member of ferrous material, a sun gear made by cutting and gear-cutting a bar-shaped member of ferrous material, and three pins made by cutting three bar-shaped members of ferrous material. They are assembled one another by press-fitting.

For the assembling by the press-fitting, a hole of a member in which a pin is to be press-fitted, the diameter of the pin, and the surface roughness of the hole and pin must be finished with considerably high accuracy, so that it is necessary to thoroughly perform parts management and process control in view of reliability of a product. In addition, the pin itself is extremely small, so that it is hard to easily and efficiently carry out the press-fitting of the pin. Therefore, this requires a great deal of skill. Moreover, coupling of the carrier and the sun gear by press-fitting is required to ensure sufficient rotation-strength which is resist to a maximum load torque to which they are subjected in use.

### DISCLOSURE OF THE INVENTION

In view of the foregoing problems of the prior art gears, it is an object of the present invention to provide a metal-made, high precision gear and a gear mechanism, the high precision gear being made of novel material providing excellent workability, and having a unique combination of high hardness, high strength, and excellent surface smoothness, as compared to the prior art gears which are made of resin or tool steel.

The inventors of the present invention have discovered that a precision gear whose module is 0.2 or less can be made from an amorphous metal alloy which has a ternary, quaternary or higher composition, for example, a composition comprising ferrous elements, such as Fe, Co, Ni, and Cu, Ti, Zr, Hf, as the principal elements, and which provides, to the full, strength comparable to that of tool steel, excellent workability, mechanical properties and dynamic properties. The amorphous metal alloy of which the gear according to the present invention is formed is characterized by a disordered structure which does not have a fixed regularity whose XRD pattern is a halo pattern, namely exhibits a broad peak.

The gear of the present invention which is made of the amorphous metal alloy having the above-mentioned structure can be manufactured such that its surface roughness is at least 2 µm Ry and its dimensional accuracy is at least the range of +/- 5 µm. This is extremely advantageous for producing with good accuracy, a precision gear whose module is 0.2 or less and which facilitates workability and has excellent mechanical properties and dynamic properties.

In the precision gear whose module is 0.2 or less, uniform surface pressure distribution must be ensured and generation of local stress must be avoided as much as possible. In accordance with the present invention, there can be realized a precision gear whose surface roughness and dimensional accuracy are improved, thus facilitating smooth power transmission by the precision gear, reducing loss of the power transmission and increasing durability of the precision gear.

The smaller a module of a precision gear, the effect of the improvement in surface roughness becomes more remarkable. The precision gear according to the present invention is made of the amorphous metal material which contributes to the formation of an extremely gentle uneven-surface without micro-order edge regions. Therefore, in the precision gear according to the present invention, uniform pressure distribution on a tooth flank is ensured, problems such as microscopic damage and the like can be minimized and the effect with respect to durability can be exhibited.

Unlike a precision gear made of metal having a regular crystal structure, the precision gear according to the present invention is made of metal having a disordered structure which does not have a crystal orientation, so that the precision gear of the present invention has a strong structure which is resistive to external stress from all directions. Therefore, according to the present invention, there can be provided an ultra-high-precision gear which does not have cracks and chipping and is highly reliable.

Moreover, as metallic material for a gear, which should be substituted for tool steel, metallic material which exhibits either Vickers Hardness of Hv 500 (equivalent to Rockwell Hardness of HRC 49) or more, or tensile strength of 1500 MPa or more, is considerably advantageous. In particular, metallic material which provides both of the properties is preferable.

A precision gear whose module is 0.2 or less may be formed of an amorphous metal alloy having a ternary, quaternary or higher composition expressed by the formula of M₁₀₀₋ₙTMn (in which M is one or more elements selected from the group consisting of Fe, Co, Ni, Cu, Ti, Zr, and Hf; TM comprises at least two elements selected from among transition metal elements in Groups 3, 4, 5, 6, 8, 9, 10 and 11 (except for elements used for M) and typical elements in Groups 13, 14, and 15; and n is a number between 5 atomic percent and 50 atomic percent). However, when the n is less than 5 atomic percent in the amorphous metal alloy, it is difficult to make a precision gear from the amorphous metal alloy, so that this case is undesirable for producing a precision gear whose module is 0.2 or less.

Even if the n exceeds 50 atomic percent in the amorphous metal alloy, it is possible to make a precision gear from the amorphous metal alloy. However, this case causes the hardness, strength and dimensional accuracy of the precision gear to be easily reduced and is thus undesirable. For that reason, the n is restricted to the range of 5 atomic percent to 50 atomic percent.

It is preferable that one or more elements selected from the group consisting of Cr, Mo, Zr, Hf, Nb, Al, Sn and B are included in the TM. By the addition of such an element (or elements), ordering of the disordered structure by crystallization is controlled, and it is possible to provide a precision gear which is more thermally stable and highly reliable. By satisfying the above-mentioned requirements, amorphous metal alloys which provide good workability can be obtained, precision gears which have excellent mechanical and dynamic properties can be successfully formed of the amorphous metal alloys, and gear mechanisms in which the precision gears are employed can be obtained.

It has been found that the precision gear which is formed of a Cu-based alloy exhibits a tensile strength of 1800 MPa or more, a large elongation strain exceeding 3.5%, high-strength and considerably excellent resistance to fracture. The fracture-resistant metal alloy of which the precision gear is formed and which is the Cu-based alloy comprises a composition represented by the formula of CuₚTiqM₁₀₀-p-q (in which M1 is one or more elements selected from the group consisting of Hf, Zr, iron group elements, platinum group elements, noble metals (Group 11), Al, Sn and Zn; p is a number between 50 atomic percent and 65 atomic percent; and q is a number between 2 atomic percent and 20 atomic percent).

If the p is less than 50 atomic percent, the hardness and strength of the metal alloy are lowered and, if the p exceeds 65 atomic percent, the excellent fracture-resistance of the metal alloy is detracted. Therefore, such values of the p are not favorable. In addition, if the q is less than 2 atomic percent, a limit of the elongation strain is lowered and, if the q is exceeds 20 atomic percent, it becomes difficult to obtain the excellent surface smoothness which is an important feature of the precision gear according to the present invention. Therefore, such levels of the q are not favorable. Moreover, in order to prevent the fracture-resistance from being adversely affected, it is preferable that between 10 atomic percent and 40 atomic percent, and better yet between 20 atomic percent and 35 atomic percent Hf or Zr is included in the M1.

In another embodiment, the precision gear is formed of a Ni-based alloy whose composition elements are all transition metal elements, so that the precision gear is tough. Also, Ni is the principal element of the alloy, so that the precision gear has high hardness and high tensile strength. The alloy has a composition represented by the formula of Ni₁₀₀₋ₑ₋ₜ₋ᵤNbₛ(Zr, Hf)ₜM2ᵤ (in which M2 is one or more elements selected from the group consisting of Ti, iron group elements, platinum group elements, noble metal (group 11), s is a number between 10 atomic percent and 25 atomic percent, t is a number between 5 atomic percent and 20 atomic percent, u is a number between 5 atomic percent and 25 atomic percent, and the sum of the t and the u is between 10 atomic percent and 35 atomic percent). In particular, it is preferable that between 5 atomic percent and 20 atomic percent Ti is included in the M2.

A Ni-Nb based alloy forms a passive-state film in an oxidizing environment and is a material whose quality is hard to be deteriorated by oxidation. The greatest merit of the present invention lies in the discovery that a non-lubricant gear mechanism in which maximum use of dynamic properties having no resistance to the viscosity of lubricant can be achieved has been formed. Among the precision gears according to the embodiments of the present invention, this precision gear is a precision gear which is essential in order to obtain a non-lubricate gear mechanism.

Even in a case where the s is more by 15 atomic percent than the maximum value thereof, and the t and u are respectively less than the minimum values thereof or zero, a precision gear can be made from such an amorphous metal. However, when the precision gear is manufactured by a conventional manufacturing method, processing conditions are severe and it is difficult to get excellent dimensional accuracy and surface accuracy. When the precision gear is used under non-lubricant conditions, the surface roughness of the precision gear has a significant effect. Therefore, the surface roughness is limited to the extent that a transferability of 2 µm Ry or less can be positively obtained.

In still another embodiment, the precision gear is made of a Fe-based alloy. Of the alloys of which the precision gears according to the preferred embodiments of the present invention are made, the alloy of which this precision gear is formed provides highest hardness. Therefore, the precision gear has gear teeth which are elastically undeformable. This alloy which is elastically undeformable has a composition represented by the formula of Fe_{100-x-y}M3ₓM4_{y}, (in which M3 is one or more metal elements selected from the group consisting of transition metal elements in Groups 3, 4, 5 and 6; M4 is one or more elements selected from the group consisting of Mn, Ru, Rh, Pd, Ga, Al, Ge, Si, B and C; x is a number between 2 atomic percent and 35 atomic percent; and y is a number between 5 atomic percent and 30 atomic percent).

When an element (or elements) in Group 6 is not included in the M3, the amount of the M3 is preferably 20 atomic percent or less. Also, when the M4 includes B, the amount of the M4 is preferably more than 15 atomic percent. Both the M3 and the M4 are essential elements for facilitating the formation of the precision gear according to the present invention. In particular, the M3 is an important element for improving thermal resistance. If the x exceeds 35 atomic percent or is less than 2 atomic percent, contribution to thermal resistance is not made and, if the y exceeds 30 atomic percent or is less than 5 atomic percent, the dimensional accuracy and surface smoothness of the precision gear will be considerably lowered, so that the values are not favorable.

It has become clear that, in producing the precision gear from the Fe-based alloy, when Co and Ni are substituted for a portion of Fe in the alloy, the melting point of the alloy is lowered, the viscosity of molten metals is lowered, and the hardness and strength of the alloy are slightly lowered, but the precision gear having more excellent dimensional accuracy and better surface smoothness can be obtained.

In the case where the portion of the main element Fe is substituted by Co and Ni, the alloy has a composition represented by the formula of (Fe₁₋ₐNi)ₐ)_{100-x-y}M3ₓM4_{y} in which a representing the mixing ratio of Fe and Co as well as Ni is between 0.1 and 0.7 and more preferably between 0.2 and 0.6. If the mixing ratio is less than 0.1, melting point-reducing-effect which is obtained by adding Co and Ni is little seen. If the mixing ratio exceeds 0.7, the effect of Fe with respect to strength is not provided.

Moreover, regarding the alloy containing Fe as the principal element thereof and the Fe-based alloy in which the portion of Fe is substituted with Co and Ni, particularly in the case where the M4 is selected from the group consisting of Si and B, the precision gears are produced from the alloys at low cost. Additionally, in this case, it has become clear from mounting test of the precision gears that the existence of such metalloid elements remarkably suppresses elastic deformation which is brought about due to load. This shows that the precision gears are ideal gears in which the deflection of gear teeth which may be brought about before and after meshing of the thick gear whose module is 0.2 or less is smallest in the precision gears of the preferred embodiments according to the present invention.

In addition, it has become clear that they exhibit remarkably excellent surface smoothness and are ultimately favorable in terms of miniaturization of precision gears in the preferred embodiments according to the present invention. In this case, the preferable total amount of Fe, Co and Ni is 70 atomic percent or more, and the content of the M3 is between 2 atomic percent and 10 atomic percent. If the content of the M3 is less than 2 atomic percent or exceeds 10 atomic percent, achieving of excellent accuracy and surface smoothness is difficult and thus such levels are not favorable.

In yet another embodiment the precision gear is made of an alloy containing Zr or Hf as the principal element thereof. This alloy has a widest super-cooling liquid temperature zone in the preferred embodiments of the present invention and is characterized by shapability of a complex configuration which is achieved even if cooling rate is relatively decreased. It has become clear that a precision gear which is ultimately superior in dimensional accuracy and surface smoothness can be obtained from the alloy.

The alloy containing Zr or Hf as the principal element has a composition expressed by the formula of (Zr, Hi)ₐM5_{b}M6_{c} (in which M5 is one or more elements selected from Groups 3, 5 and 6, iron group elements, platinum group elements, noble metals (Group 11), Ti and Mn; M6 is one or more elements selected from the group consisting of Be, Zn, Al, Ga, B, C and N; a is between 30 atomic percent and 70 atomic percent; b is between 15 atomic percent and 65 atomic percent; and c is between 1 atomic percent and 30 atomic percent). The surface hardness of the precision gear formed of this alloy is about Hv 500 which is lowest with respect to the surface hardness of the precision gears discussed above. However, the alloy of this precision gear contains, as the principal elements, the elements (Zr, Hf) having high corrosive resistance, so that the precision gear can be used outdoors or in a corrosive environment. Additionally, it is possible to produce the precision gear from the element groups whose biotoxin properties are lowest among the alloys of the precision gears of the preferred embodiments according to the present invention, and which can be used for medical application.

If the a is less than 30 atomic percent, the excellent anticorrosive properties are lost, while if it exceeds 85 atomic percent, dimensional accuracy and surface smoothness can not be obtained. Therefore, these levels are not favorable. In addition, if the b and c are outside of the specified values, material-filling defects tend to occur at gear teeth to be formed, thus adversely affecting durability of the precision gear, so that the levels of the b and c are not favorable.

In still embodiment , the precision gear is made of an alloy containing Ti as the principle element thereof. This precision gear has high strength which is next to that of the precision gear made of the Fe-based alloy. In addition, this precision gear is a lightest gear among the precision gears of the preferred embodiments according to the present invention, since the specific gravity of Ti is low. It has become clear that a gear mechanism employing the precision gear, in which the torque loss at the starting time of the gear mechanism is lowest, can be obtained. Moreover, it has also become clear that if this precision gear is employed in an off-centered gear mechanism, the precision gear performs an important role in controlling vibration that occurs with center deflection.

The Ti-based alloy has a composition expressed by the formula of Ti₁₀₀₋ᵢ₋ⱼ₋ₖCuᵢM7ⱼM8ₖ (in which M7 is one or more transition metal elements selected from the group consisting of Zr, Hf, iron group elements and platinum group elements; M8 is two or more elements selected from the group consisting of elements in Groups 3, 5, 6, Al, Sn, Ge, Si, B and Be; i is between 5 atomic percent and 35 atomic percent; j is between 10 atomic percent and 35 atomic percent; and k is between 1 atomic percent and 20 atomic percent).

If the i and j are less than the specified minimum atomic percent, the excellent surface smoothness is not obtained, while if they exceed the maximum atomic percent, predominance of Ti contained as the principal element is lost due to increase in the specific gravity, so that the levels of the i and j are not favorable. In addition, if the k is less than 1 atomic percent or is more than 20 atomic percent, it becomes difficult to obtain the gear configuration and, thus, the levels of the k are not favorable.

Generally, in an amorphous metal structure having crystals in the amorphous structure thereof, the mechanical properties of amorphous metal material, such as high strength, are reduced. However, if the volume ratio of the amorphous metal material is 50% or more, there is little change in the mechanical characteristics. Moreover, even if the volume ratio of the crystals is 50% or more, in the case where the crystal size is small, specifically, even when crystal particles of 100 nm are present, there is little change in the mechanical characteristics.

It is known that in the case where crystal particles having excellent toughness and ductility are mixed in the matrix of an amorphous metal, the mechanical characteristics are improved. In this case, the crystal size is preferably 20 nm or less. If the crystal size exceeds 100 nm, there is an adverse effect on surface roughness of a gear made of the metal material. Therefore, the crystal particles that are mixed in the amorphous metal matrix are preferably 100 nm or less in size.

Moreover, in the amorphous metal material, fragility increases with high hardness, and it is a known fact that this has a large adverse effect on resistance to gear surface fatigue such as pitting and the like. However, many of the precision gears of the preferred embodiments according to the present invention have excellent resistance to gear surface fatigue such as pitting and the like although they have high hardness, since the precision gears according to the present invention have low Young's module.

In order that this effect can be remarkably exhibited, it is preferable that the amount of non-metallic elements contained in the materials of the gears is 30 atomic percent or less. It has become clear that, if the amount of non-metallic elements is 25% or less, even in the hardest precision gear whose material contains Fe as the principal element thereof, bending strain to yield or breakage is 1.5% or more. This leads to the conclusion that it is possible to produce tough precision gears.

As discussed above, according to the present invention, there is provided a precision gear whose module is 0.2 or less, which is superior in dimensional accuracy, surface smoothness and mechanical properties as compared to the prior art gears, and which can be formed with a simple process.

In forming the precision gear of the present invention whose module is 0.2 or less, regardless of the stability of the disordered structure of the material for the precision gear, the cooling rate must be at least 300°C/second in order to suppress volume shrinkage from molten alloy. By meeting this requirement, it is possible to bring out the characteristics of the precision gear according to the present invention. It is more preferable that the cooling rate is 10⁴°C/second or more. Incidentally, it has been observed that, if the cooling rate reaches 10^{7°}C/second or more during casting, a phenomenon occurs wherein solidification occurs during formation of the gear, it is difficult to fill a mold with molten metal and, consequently, the surface roughness and dimensional accuracy of the gear is remarkably reduced.

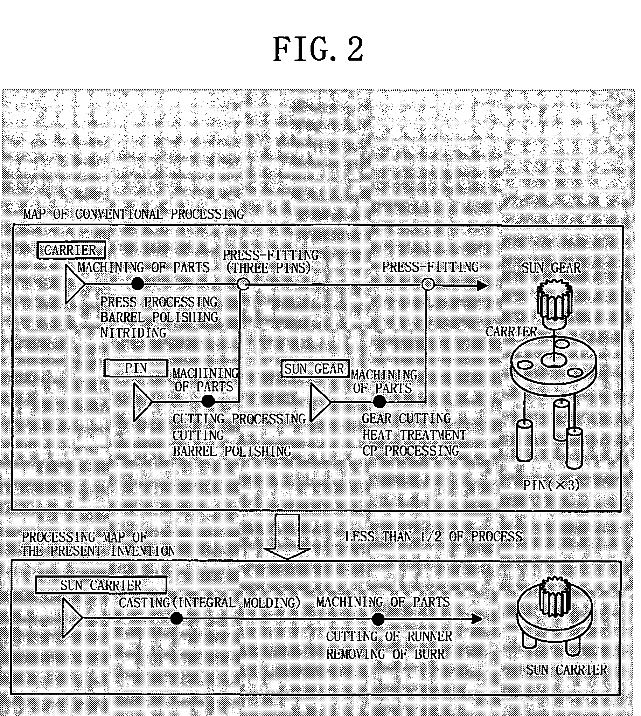

According to the present invention, there is provided a metal-made, high-precision gear which is made of metallic material which provides a unique combination of high hardness, strength and surface smoothness and which is superior in workability. It is possible to make a product which serves as a planetary gear reduction system, employs a precision gear made of metallic material having general properties superior to those of the tool steel of which the prior art gear is made, and is excellent in terms of reduction in generation of metallic noise. Additionally, the precision gear according to the present invention has a strong structure with respect to external stress, so that crack and breakage do not occur in the precision gear. Moreover, the precision gear is excellent in configuration accuracy, so that great improvements in the reliability and durability of the precision gear can be expected. In addition, according to the present invention, the step for assembling each of the parts is eliminated and, because integral molding can be carried out, the number of the steps can be reduced as shown in Fig. 2, and it becomes unnecessary to check assembly accuracy.

### BRIEF DESCRIPTION OF THE DRAWINGS

Fig. 1 is a schematic exploded perspective view of a planetary gear reduction system according to the present invention;
Fig. 2 is a view which is of assistance in explaining a conventional method for manufacturing a conventional planetary gear and a method according to the present invention for manufacturing the planetary gear of the present invention;
Fig. 3 is a schematic view which is of assistance in explaining production of a sun carrier by a pressure casting apparatus;
Fig. 4 is a heat cycle flowchart; and
Fig. 5 is an enlarged photograph showing a side of the sun carrier according to the present invention.

### BEST MODE FOR CARRYING OUT THE INVENTION

Products to be produced according to the present invention may include machine elements which are required to be easily made by machining and required to have excellent mechanical and dynamic properties. As one example of such machine elements, sun carriers whose module are 0.04 and which have complex configurations and are to be employed in a planetary gear reduction system have been selected.

Fig. 1 illustrates an exploded planetary gear reduction system in which the sun carriers produced according to the present invention are employed. In Fig. 1, reference numeral 1 denotes a gear-housing, around an inner peripheral surface of which inner teeth are formed. Also, reference numeral 2 designates a bearing which is to be fixed to the gear-housing 1 and supports an output axis carrier 3 so as to allow it to be rotatable relative to the bearing 2. Reference numeral 4 denotes a pinion which is to be fixed on an axis of an unshown motor.

The pinion 4 is rotated by driving of the unshown motor, whereby three planetary gears 6a which are rotatably mounted on axes of a sun carrier 5a are rotated. The planetary gears are meshed with the inner teeth of the gear-housing 1. The sun carrier 5a is rotated in the same direction as the pinion 4 is done, while being reduced.

By the rotation of the sun carrier 5a, three planetary gears 6b which are rotatably mounted on axes of a sun carrier 5b are rotated. The planetary gears 6b are meshed with the inner teeth of the gear-housing 1. The sun carrier 5b is rotated while being reduced. The power is sequentially transmitted and causes the output axis carrier 3 to be finally rotated.

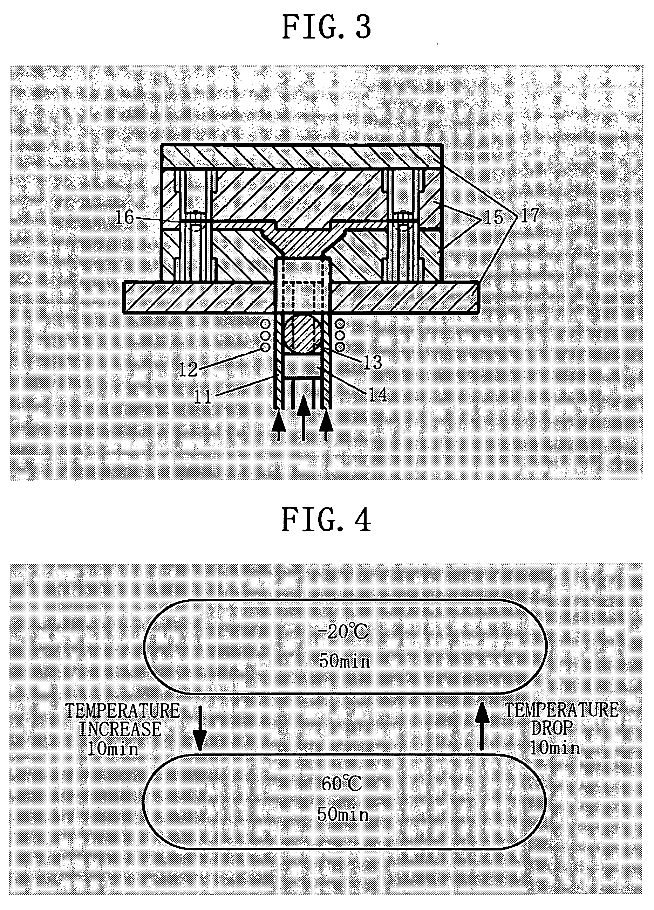

The present invention was put into practice by using a pressure casting apparatus, taking the mass-production of the sun carrier into consideration. Fig. 3 is a schematic view of the pressure casting apparatus. In Fig. 3, complex mechanisms such as a water cooling mechanism, a vacuum exhaust system and a cutting tool are omitted for clarity of illustration.

A high frequency coil 12 is mounted around an outer periphery of a sleeve 11. Metal which is put in the sleeve 11 becomes molten metal 13 by high frequency induction heating. The pressure casting apparatus is provided with a window for observing the molten metal 13. The temperature of the molten metal 13 can be measured by visual observing or with a radiation thermometer. A thermocouple may be disposed on the sleeve 11, whereby more accurate measurement of the temperature can be made. However, in the illustrated embodiment of the present invention, the measurement of the temperature was not made by using the thermocouple but was made by using the radiation thermometer.

A pushing head 14 for supporting the molten metal is inserted in the sleeve 11. When injection molding is carried out, the pushing head 14 and the sleeve 11 are adapted to be moved upward at a maximum speed of 4m/second. By the upward movement of the pushing head 14 and the sleeve 11, the molten metal 13 is transported into a cavity portion 16 via runners in molds 15. The cavity portion 16 is steadily supported by metal plates 17. The molten metal is filled into the cavity portion 16 having forming surfaces for forming the sun carrier, whereby the sun carrier is precisely formed.

The molten metal is then cooled at a cooling rate of about 10³ to 10⁴ °C/second in the molds and the cavity portion which have been sufficiently cooled to room temperature, and is rapidly solidified. The molds and the cavity portion are made of alloy tool steel for hot dies (SKD-1). The cavity portion 16 may be covered with simple and smooth coating, if needed. Also, the cavity portion 16 can be separated from the molds and are designed so as to facilitate releasing of the product. Pressure which is applied to the molten metal during the rapid solidification of the molten metal depends upon hydraulics applied to the pushing head, but is set in a such a manner that pressure applied onto a surface of the product becomes 1MPa or so.

When the cavity portion 16 is made, the cavity portion is subject to electrical discharge machining, barrel polishing, and chemical polishing. The cavity portion 16 is designed so as to allow the roughness of tooth flanks of the sun carrier formed by the cavity portion to be kept at 1 µm Ry or less and so as to allow the surface roughness of the axes of the sun carrier to be kept at 0.5 µm Ry or less. The surface roughness of the molds can be checked by a non-contact type measuring method. The checking of the surface roughness was carried out using a wide visual-field confocal microscope having a function for measuring surface roughness.

For comparison purposes, the results of evaluating examples of the above-mentioned gear obtained according to the present invention and examples of a conventional gear are shown in the following Table 1. Regarding dimensional errors in the Table 1, the dimensional error of the inner diameter of each gear was measured using a measuring microscope. The roughness of the tooth flanks of the gears was measured by the non-contact roughness-measuring method. The hardness of the surfaces of the gears was measured at a load of 100g to 1kg by using a micro Vickers hardness tester. Moreover, the tensile strength was measured using a bench tensile tester having analytic functions, in which foils each having a thickness of 60 µm corresponding to a tooth thickness and a width of 50 µm were fixed at intervals of 0.20 mm.

Moreover, planetary gear reduction systems employing the sun carriers were mounted to φ 2 mm brushless motors and subjected to a heat cycle under conditions shown in Fig. 4, taking a service environment into consideration. Continuous operation testing was performed for 48 hours and it was examined as to whether there were deformation, operational abnormalities and the like. The examination for the presence or absence of the deformation was carried out by comparing a projection pattern chart with the gears using a measuring microscope. Sun carriers which were nonstandard in shape were regarded as deformed sun carriers.

The XRD patterns in the Table 1 were measured using a micro X-ray diffraction device and regarded as a halo pattern (G), a halo pattern with a peak (G+C) or a complete crystal pattern (C). In the Table 1, the (G) is a symbol which indicates an amorphous state, while the (C) is a symbol which indicates a crystal state.

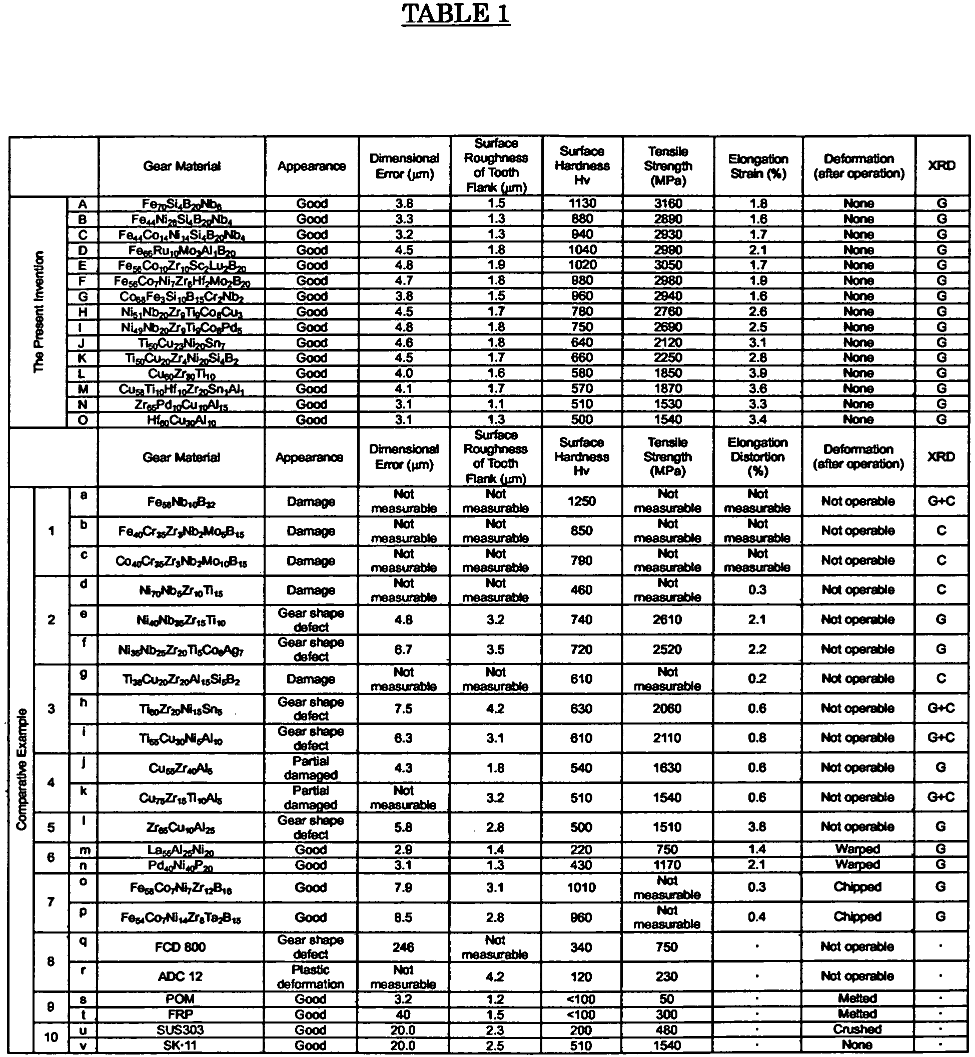

Working examples A-G are precision gears made of alloys containing Fe and Co as the principal elements thereof. In particular, the working example A which was formed of the alloy having a composition represented by the formula of Fe_{100-x-y}M3ₓM4_{y} in which M4 is Si and B, has the highest hardness among the other working examples of the present invention, and is considerably excellent in dimensional accuracy and surface roughness. Also, the working examples B and C of the present invention which were formed of the alloys having compositions in which, in the composition of the working example A, Co and Ni were substituted for a portion of Fe and the M3 was Nb whose amount were suitably balanced, have been highly improved in dimensional accuracy and surface roughness thereof. Thus, highly efficient, highly wear-resistant gears could be obtained. The working example D which was made of the alloy including a platinum group element has a great limit of bending strain. Thus, the gear which is improved in resistance to fracture can be obtained.

The working examples A-G all have a Vickers hardness of Hv 1000, a tensile strength of a level near 3000 MPa, and elongation strain of 1.6% or more. Thus, the precision gears which are highly hard and strong, in which an amount of bending strain relative to stress is small, and which are hard to be elastically deformed can be obtained. Consequently, it is possible to obtain gear mechanisms which have best ideal operational properties among ultra-precision gear mechanisms employing the working examples of the precision gear according to the present invention.

Working examples H and I are precision gears made of Ni-based metal alloys in which all composition elements thereof are transition metal elements. As compared to the conventional metal-made gears and even as compared to the working examples made of the alloys containing Fe and Co as the principal elements thereof, the working examples H and I have completely superior hardness and strength, and a great limit of bending strain.

In view of the excellent corrosion resistance provided by a Ni-Nb based alloy, in order to demonstrate applicability of the Ni-Nb based alloy in sea water in which lubricating oil can not be used, an operation-durability test of planetary gear reduction systems employing the working examples H and I was additionally performed in a supersaturated salt solution having a temperature of 40°C. Before and after the test, no changes in various properties as the planetary gear reduction systems had were seen, and no changes in the gears were seen. Thus, the gear mechanisms which can be used even in the sea water can be obtained.

Working examples J and K are precision gears made of Ti-based alloys. In gear mechanisms employing the working examples J and K, torque loss at the time of starting of the gear mechanisms was small, so that response speed of the entire gear mechanisms was increased by 5% or so. Thus, by the employment of the working examples J and K, rapid-response gear mechanisms can be obtained.

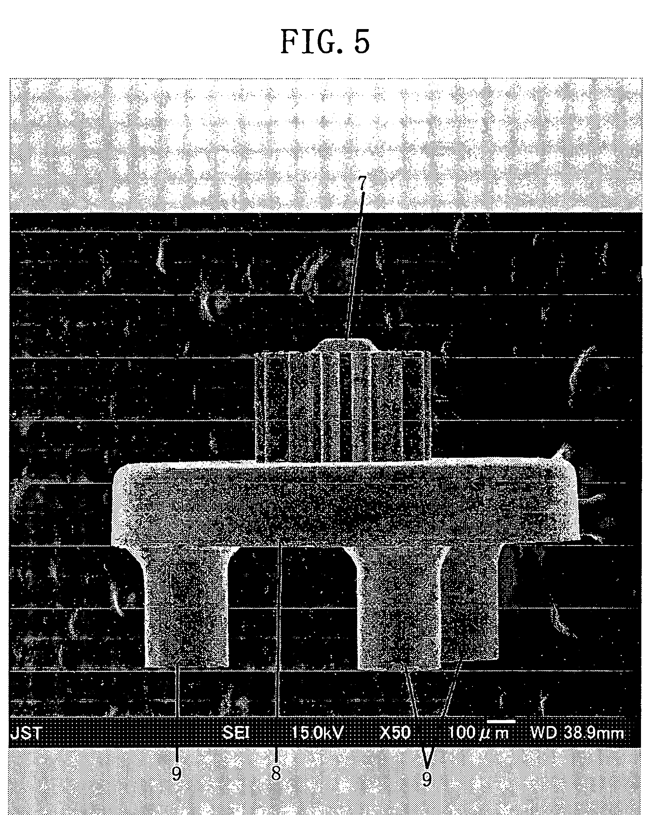

Working examples L and M are precision gear made of Cu-based alloys. Of the working examples of the precision gear according to the present invention, the working examples L and M exhibited the greatest elongation strain. Both the working examples L and M exhibited tensile strength of 1850 MPa or more which was greater than that of 1500 MPa which was exhibited by gears made of the conventional material. Thus, the precision gears which are superior in their elongation strain and tensile strength can be obtained. In particular, the working example L has an elongation strain limit of 3.9% which is considerably high. Thus, of the working examples of the precision gear according to the present invention, the working example L is most superior in a resistance to breakage. Therefore, it is possible to obtain a gear mechanism in which reliability with respect to operational defects by damage is extremely high. Fig. 5 is an enlarged photograph of a side of an integrally formed sun carrier L, which was taken using a scanning electron microscope. In Fig. 5, reference numeral 7 denotes a sun gear, reference numeral 8 designates a carrier plate, and reference numeral 9 denotes three axes.

Working examples N, O, P are precision gears made of metallic material containing Zr and Hf as the principal elements thereof. These working examples are precision gears which are most easily formed among the working examples of the present invention. Thus, it is possible to form precise gears whose surface roughness is excellent, whose dimensional error is reduced, and which are greatly resistant to acid and formed of material mainly containing biocompatible elements. Moreover, it is possible to provide gear mechanisms which are assembled by using such precision gears.

As discussed above, all of the precision gears according to the working examples of the present invention have the excellent features. It is possible to obtain better gear mechanisms by combining these features.

Comparative examples 1a and 1b are precision gears made of metallic material which contains Fe as the principal element thereof but do not come within the scope of the present invention. A comparative example 1c is a precision gear made of metallic material which contains Co as the principal element thereof but do not come within the scope of the present invention. Regarding the comparative example 1a in which the amount of metalloid elements is greater than 30 atomic percent, it was not shaped at the stage of mold-releasing. Regarding the comparative example 1c whose material has a composition represented by the formula of M₁₀₀₋ₙTMₙ in which n is less than 50 atomic percent, and the comparative example 1b whose material has a composition represented by the formula of Fe_{100-x-y}M3ₓM4_{y} in which x exceeds 20 atomic percent, they were damaged at the time of mold-releasing. Thus, the desired gears could not be obtained.

Comparative examples 2d to 2f are precision gears made of metallic materials which contain Ni as the principal element thereof but do not come within the scope of the present invention. Regarding the comparative example 2d whose material has a composition represented by the formula of Ni₁₀₀₋ₛ₋ₜ₋ᵤNbₛ(Zr, Hf)M2ᵤ in which s is less than 10 atomic percent, it was damaged at the time of mold-releasing. Thus, the desired gear could not be obtained. Regarding the comparative example 2e whose material has a composition represented by the formula of Ni₁₀₀₋ₛ₋ₜ₋ᵤNbₛ(Zr, Hf)ₜM2ᵤ in which s exceeds 25 atomic percent, it became amorphous and had a configuration close to that of a gear but did not provide excellent surface smoothness which was 2 µm Ry or less. Moreover, regarding the comparative example 2e, the material of the comparative example 2c could not be filled so as to form the teeth ends of the example, so that standard tooth configuration was not obtained and, therefore, the produced gear which was incorporated in a gear mechanism could not be operated.

Moreover, regarding the comparative example 2f whose material has a composition represented by the formula of Ni₁₀₀₋ₛ₋ₜ₋ᵤNbₛ(Zr, Hf)ₜM2ᵤ in which the total amount of t and u is 35 atomic percent or more, it became amorphous and had a configuration close to that of a gear but did not provide excellent surface smoothness which was 2 µm Ry or less. In addition, regarding the comparative example 2f, the material of the comparative example 2f could not be filled so as to form the teeth ends of the example, so that standard tooth configuration was not obtained and, therefore, the produced gear which incorporated in a gear mechanism could not be operated.

A comparative example 3g is a precision gear made of metallic material which contains Ti as the principal element thereof but does not come within the scope of the present invention. The comparative example 3g whose material has a composition represented by the formula of Ti₁₀₀₋ᵢ₋ⱼ₋ₖCuᵢM7ⱼM8ₖ in which k is 20 atomic percent or more was damaged at the time of mold-releasing. Thus, the desired gear could not be obtained. Both a comparative example 3h whose material has a composition represented by the formula of Ti₁₀₀₋ᵢ₋ⱼ₋ₖCuᵢM7ⱼM8ₖ in which i is less than 5 atomic percent, and a comparative example 3i whose material has a composition represented by the formula of Ti₁₀₀₋ᵢ₋ⱼ₋ₖCuᵢM7ⱼM8ₖ in which j is less than 10 atomic percent, became amorphous and had configurations close to that of a gear but did not provide excellent surface smoothness of 2 µm Ry or less. In addition, regarding the comparative examples 3h, 3i, the materials of the examples 3h, 3i could not be filled so as to form the teeth ends of the examples, so that standard tooth configurations were not obtain and, therefore, the produced gears which were incorporated in gear mechanisms could not be operated.

Comparative examples 4j, 4k are precision gears made of metallic materials which contain Cu as the principal element thereof but do not come within the scope of the present invention. The comparative example 4j whose material has a composition represented by the formula of CuₚTi_{q}M1_{100-p-q} in which q is less than 2 atomic percent became amorphous and was greatly superior in surface smoothness. However, the comparative example 4j was damaged at a part of the teeth thereof at the time of mold-releasing. Therefore, the desired gear could not be obtained. The comparative example 4k whose material has a composition represented by the formula of CuₚTi_{q}M1_{100-p-q} in which p exceeded 65 atomic percent was also damaged at a part of the teeth thereof at the time of mold-releasing. Thus, the desired gear could not be obtained.

A comparative example 51 is a precision gear made of a metallic material which contains Zr as the principal element thereof but does not come within the scope of the present invention. The comparative example 51 whose material has a composition represented by the formula of (Zr, Hf)ₐM5_{b}M6_{c} in which b is less than 15 atomic percent became amorphous and had a configuration close to that of a gear, but did not provide excellent surface smoothness of 2 µm Ry or less. Additionally, the material of the comparative example 51 could not be filled so as to form the teeth ends of the example, so that standard tooth configuration was not obtain and, therefore, the produced gear which was incorporated in a gear mechanism could not be operated.

Comparative examples 6m, 6n are precision gears, the production of which were previously reported and whose metallic materials respectively contain La and Pd as the principal elements thereof. Both the material of the comparative example 6m and the material of the comparative example 6n were excellent in workability. It was possible to obtain the products in which good dimensional accuracy and surface roughness were provided.

However, in the comparative example 6m whose material contains La as the principal element thereof, remarkable distortion of a tooth shape which was regarded as deformation generated due to softening after mounting test of the example 6m had been carried out was observed. Additionally, operational abnormalities of the comparative example 6m occurred. Therefore, practical use of the comparative example 6m is impossible. In the comparative example 6n whose material contains Pd as the principal element thereof, distortion of a tooth shape was also generated. Unlike the distortion of the tooth shape of the comparative example 6m, the distortion of the tooth shape of the comparative example 6n was characterized in that it was produced as if clay was rubbed. As compared to the comparative example 6m in terms of the effect on dimensional accuracy, the comparative example 6n was little subjected to the effect. However, at the time of meshing of the working example 6n, catching of the comparative example 6n occurred due to deformation. Therefore, the comparative example 6n is unsuitable for application to a precision gear to which a heavy load is applied.

Comparative examples 7o, 7p are precision gears which are made of amorphous metal materials containing Fe as the principal element thereof and obtained by sintering. Predictably, as compared to the working examples according to the precision gear of the present invention which are obtained from molten metal by a rapid solidification process, the comparative examples 7o, 7p are remarkably low in terms of strength. Moreover, in the comparative examples 7o, 7p, many breakages of the teeth which were regarded as chippings were observed. Therefore, the materials for the comparative examples 7o, 7p are hard to be practically used.

Comparative examples 8q, 8r are precision gears which are made of existing crystal metal materials for casting. Although formation of the comparative example 8q was tried using a Fe based crystal alloy, it was impossible to cause a mold to be filled with the alloy and, therefore, the desired gear could not be obtained. Moreover, the comparative example 8r made of an Al based crystal alloy for die casting was deformed at the time of mold-releasing, so that the desired gear could not be obtained.

Comparative examples 9s, 9t are precision gears which were made of resinous materials. In both of the gear according to the comparative example 9s which was made of a general-purpose resin material, and the gear according to the comparative example 9t which was made of a glass fiber reinforced resinous material, deformation of the teeth shapes was observed. Therefore, the use of the comparative examples 9s, 9t is limited to the use under a light load environment.

Comparative examples 10u, 10v are precision gears which were made of general Fe-based metallic materials using the present manufacturing-method for a sun carrier. In the comparative example 10u which was made of a typical stainless steel, its strength was not efficient and crush of the teeth which was regarded as plastic deformation was observed. Therefore, the comparative example 10u does not extend to levels which can be achieved by the precision gears according to the working examples of the present invention. General tool steel for the comparative example 10v is closest to materials currently used for formation of gears.

The results of the comparison made between the sun carrier B of the present invention which has the most favorable surface transferability among the sun carriers according to the working examples of the present invention which are produced by the processes discussed above, and the prior art product (equivalent to the comparative example 10v) which is formed by cutting tool steel, in terms of surface roughness prior to mounting test thereof, are shown in Table 2. The surface roughness of the sun carriers B and prior art products of the same number was measured by a confocal microscope. In the table 2, the value outside the parenthesis represents the average of the values actually measured, and the value in the parenthesis represents a difference between the maximum value and the minimum value.

**Table 2**

| Item Measured | Measuring Device | Product of this Invention | Product of Prior Art |
|---|---|---|---|
| | | Surface Roughness [µm] | Surface Roughness [µm] |
| Tooth Flank | Confocal | 1.3 | 2.5 |
| | Microscope | (0.2) | (1.0) |
| Pin surface | Confocal | 0.4 | 0.6 |
| | Microscope | (0.0) | (0.4) |
| Carrier surface | Confocal | 1.8 | 3.0 |
| | Microscope | (0.2) | (0.7) |

Moreover, planetary gear reduction systems in which the sun carriers described above were employed were mounted to φ 2mm brushless motors. The circuit voltage of the brushless motors was 4V, the motor drive voltage was 3V, the resistance between terminals was 110.6 Ω, and the gear ratio of the planetary gear reduction systems was 18:1. The characteristic data obtained by the mounting test are shown in Table 3. The planetary gear reduction system in which the sun carrier which is one example of the precision gears according to the present invention is employed can provide general characteristics that are superior to those of the conventional planetary gear reduction system. Moreover, in the planetary gear reduction system having the sun carriers employed therein, peculiar metallic noise generated when the gears mesh with each other can be reduced.

**Table 3**

| | Starting Torque Ts [mNm] | No load Speed N₀ [rpm] | No load current l₀ [mA] | Metallic Noise |
|---|---|---|---|---|
| Product of the invention | 0.064 | 3,650 | 9 | None |
| Product of prior art | 0.058 | 2,900 | 12 | Slightly |

### INDUSTRIAL APPLICABILITY

The present invention can be applied to mechanical parts which are small-sized and in which strength, wear resistance and lubricating properties are required, as well as gears.

## Claims

1. A precision gear whose module is 0.2 or less, formed of a metallic material comprising an amorphous metal structure having a volume ratio of 50% or more **characterized in that** the metallic material has a composition represented by the formula of Fe_{100-x-y}M3ₓM4_{y}, in which M3 is one or more elements selected from the group consisting of transition metal elements in Groups 3, 4, 5 and 6; M4 is one or more elements selected from the group consisting of Mn, Ru, Rh, Pd, Ga, Al, Ge, Si, B and C; x is between 2 atomic percent and 35 atomic percent; and y is between 5 atomic percent and 30 atomic percent.

2. A precision gear according to claim 1, wherein the M4 always includes B.

3. A precision gear according to claim 1 or 2, wherein the metallic material is selected from the group consisting in Fe₇₀Si₄B₂₀Nb₆ and Fe₆₆Ru₁₀Mo₃Al₁B₂₀.

4. A precision gear according to any of the previous claims, wherein the metallic material comprises nanocrystals of 100 nm or less in the amorphous metal structure.

5. A precision gear according to any of the previous claims, wherein the precision gear has a surface roughness of 2 µm Ry or less.

6. A precision gear, according to any one of claims 1 to 5, formed by a superplastic forging process in a viscous fluid temperature.

7. A gear mechanism comprising the precision gear according to any one of claims 1 to 6, said gear mechanism comprising a planetary gear reduction system.

## Patentansprüche

1. Präzisionszahnrad, dessen Modul 0,2 oder weniger ist, das aus einem metallischen Material gebildet ist, das eine amorphe Metallstruktur mit einem Volumenverhältnis von 50 % oder mehr aufweist, **dadurch gekennzeichnet, dass** das metallische Material eine durch die Formel Fe_{100-x-y}M3ₓM4_{y} dargestellte Zusammensetzung aufweist, in der M3 ein oder mehrere Elemente ausgewählt aus der Gruppe bestehend aus Übergangmetallelementen in den Gruppen 3, 4, 5 und 6 ist; M4 ein oder mehrere Elemente ausgewählt aus der Gruppe bestehend aus Mn, Ru, Rh, Pd, Ga, Al, Ge, Si, B und C ist; x zwischen 2 Atomprozent und 35 Atomprozent ist; und y zwischen 5 Atomprozent und 30 Atomprozent ist.

2. Präzisionszahnrad nach Anspruch 1, wobei M4 stets B enthält.

3. Präzisionszahnrad nach Anspruch 1 oder 2, wobei das metallische Material ausgewählt ist aus der Gruppe bestehend aus Fe₇₀Si₄B₂₀Nb₆ und Fe₆₆Ru₁₀Mo₃Ao₁B₂₀,

4. Präzisionszahnrad nach einem der vorhergehenden Ansprüche, wobei das metallische Material Nanokristalle von 100 nm oder weniger in der amorphen Metallstruktur aufweist.

5. Präzisionszahnrad nach einem der vorhergehenden Ansprüche, wobei das Präzisionszahnrad eine Oberflächenrauheit von 2 µm Ry oder weniger aufweist.

6. Präzisionszahnrad nach einem der Ansprüche 1 bis 5, das durch einen superplastischen Schmiedeprozess in einer viskosen Fluidtemperatur gebildet ist.

7. Getriebe, welches das Präzisionszahnrad nach einem der Ansprüche 1 bis 6 aufweist, wobei das Getriebe ein Planetenuntersetzungsgetriebe umfasst.

## Revendications

1. Roue dentée de précision dont le module est de 0,2 ou moins, réalisée à partir d'un matériau métallique comprenant une structure métallique amorphe ayant un rapport volumique de 50 % ou plus, **caractérisée par le fait que** ledit matériau métallique présente une composition représentée par la formule Fe_{100-x-y}M3ₓM4_{y} où M3 est un ou plusieurs élément(s) choisi(s) dans le groupe constitué par des éléments de métal de transition dans les groupes 3, 4, 5 et 6, M4 est un ou plusieurs élément(s) choisi(s) dans le groupe constitué par Mn, Ru, Rh, Pd, Ga, Al, Ge, Si, B et C, x est compris entre 2 % atomique et 35 % atomique et y est compris entre 5 % atomique et 30 % atomique.

2. Roue dentée de précision selon la revendication 1, dans laquelle M4 comprend toujours le B.

3. Roue dentée de précision selon la revendication 1 ou 2, dans laquelle le matériau métallique est choisi dans le groupe constitué par Fe₇₀Si₄B₂₀Nb₆ et Fe₆₆Ru₁₀MO₃Al₁B₂₀,

4. Roue dentée de précision selon l'une quelconque des revendications précédentes, dans laquelle le matériau métallique comprend des nanocristaux de 100 nm ou moins dans la structure métallique amorphe.

5. Roue dentée de précision selon l'une quelconque des revendications précédentes, ladite roue dentée de précision présentant une rugosité de surface de 2 µm Ry ou moins.

6. Roue dentée de précision selon l'une quelconque des revendications 1 à 5, laquelle est réalisée au moyen d'un processus de forgeage superplastique à une température de fluide visqueux.

7. Engrenage comprenant la roue dentée de précision selon l'une quelconque des revendications 1 à 6, ledit engrenage comprenant un démultiplicateur planétaire.
